# EUROPEAN PATENT APPLICATION

(11) **EP 1 757 818 A2**
(43) Date of publication of application: **28.02.2007**
(21) Application number: 06119473.4
(22) Date of filing: 24.08.2006
(51) Int. Cl.: F15B 15/10

(54) **Pneumatic diaphragm having a bias weave pattern**

(30) Priority: 25.08.2005 US 213085
(71) Applicant: Honeywell International Inc., Morristown, New Jersey 07962 (US)
(72) Inventor: Stevenson, James F., Morristown NJ 07960 (US); Ball, Larry K., Chandler AZ 85226 (US); Kocis, Betty H., Phoenix AZ 85045 (US); Plevich, Chuck W., Casa Grande AZ 85222 (US)
(74) Representative: Haley, Stephen

(57) **Abstract**

A diaphragm (200) is provided that includes a tubular sidewall (202) and a first elastomeric material. The tubular sidewall (202) has an open end (203) and an enclosed end (204) and comprises fabric having a plurality of yarns disposed in a bias weave pattern (206). The first elastomeric material is disposed over the fabric at a predetermined thickness.

## Description

The present invention relates to pneumatic actuators and, more specifically, to a diaphragm assembly for use in pneumatic actuators.

Pneumatic actuators may be found in various applications such as commercial vehicles and aerospace applications. Though pneumatic actuators may be one of the most cost-effective linear actuators, they may be short lived when exposed to high temperatures and pressures. Generally, the low lifespan of these actuators may be due in part to construction of the actuator.

A typical pneumatic actuator may include at least a housing, a diaphragm, and a diaphragm support structure. The diaphragm may be made from a flat sheet of fabric having a number of yarns, and may be coated on at least one side -with an elastomer, which is subsequently crosslinked. In some instances, the diaphragm support structure may have an outer periphery that is generally cylindrical in shape. Thus, the diaphragm may be formed into a so-called "top hat" shape, to conform at least a portion of the diaphragm into a shape that is consistent with the outer periphery of the diaphragm support structure. Because the diaphragm fabric is originally flat, with the fabric weave crossing at right angles, this new shape may cause some of the fabric weave to distort and form a series of "rainbow-patterns" when viewed around the side of the top hat.

During the operation of the actuator, the diaphragm may be exposed to numerous pressure cycles. Although actuators and presently used diaphragms are robustly designed and operate safely, in some instances the diaphragm may become worn and potentially become inoperative. One particular type of diaphragm failure that may occur following repeated pressure cycles is known as a "curtain failure." A curtain failure may be recognized as a slit in the diaphragm fabric, and a "puckered-out" region may surround the slit on the diaphragm fabric's elastomer side. When the diaphragm fails, the actuator may no longer operate, or not operate correctly. Thus, the actuator may need to be disassembled to effect diaphragm replacement, which can increase overall cost.

Hence, there is a need for a diaphragm assembly that may be used in a pneumatic actuator that is less prone to curtain failure and/or is relatively inexpensive to make and/or reduces maintenance and repair costs associated with pneumatic actuators. The present invention addresses one or more of these needs.

The present invention provides a pneumatic diaphragm. In one embodiment, and by way of example only, the diaphragm includes a tubular sidewall and a first elastomeric material. The tubular sidewall has an open end and an enclosed end and comprises fabric having a plurality of yarns formed in a bias weave pattern. The first elastomeric material is disposed over the fabric at a predetermined thickness.

In another embodiment, and by way of example only, the diaphragm includes a tubular sidewall having an open end and an enclosed end. The sidewall comprises fabric including a first yarn crossed over a second yarn at an angle that is less than about 60°and forms a bias weave pattern. Each yarn comprises a plurality of fibers having a twist angle that is greater than about 45 degrees. Additional the diaphragm includes a first elastomeric material disposed over the fabric at a predetermined thickness.

In still another embodiment, a method is provided for forming a diaphragm for use in a pneumatic actuator. The method comprises the steps of forming a fabric tube having a tube diameter and a uniform bias angle around its circumference, using a preform-shaping tool having a top component and a bottom component, where an inner surface of the top component includes a preform shaped integrally formed therein, and disposing the fabric tube between the top and bottom components, shaping the fabric tube to reduces a diameter of the fabric tube and decrease each of the bias angles to form a fabric preform having a top-hat shape, and impregnating the fabric preform with an elastomer.

Other independent features and advantages of the preferred diaphragm will become apparent from the following detailed description, taken in conjunction with the accompanying drawings which illustrate, by way of example, the principles of the invention.

FIG- 1 is a cross sectional view of an exemplary pneumatic actuator that may employ the diaphragm assembly of the present invention;

FiG. 2 illustrates an exemplary embodiment of a diaphragm assembly that may be used in the actuator depicted in FIG. 1;

FIG. 3 is a close-up view of an exemplary bias weave pattern that may be incorporated into the diaphragm assembly depicted in FIG. 2;

FIG. 4 is a close-up view of another exemplary bias weave pattern that may be incorporated into the diaphragm assembly depicted in FIG. 2;

FIG. 5 is a close-up view of still another exemplary bias weave pattern that may be incorporated into the diaphragm assembly depicted in FIG. 2;

FIG. 6 is a close-up view of a yarn that may be incorporated into fabric of the diaphragm assembly;

FIG. 7 is a cross-sectional view of another exemplary embodiment of the diaphragm assembly;

FIG. 8 is a cross-sectional view of a fabric shaping tool in an open configuration; and

FIG. 9 is a cross-sectional view of the fabric shaping tool shown in FIG. 8 in a closed configuration.

The following detailed description of the invention is merely exemplary in nature and is not intended to limit the invention or the application and uses of the invention. Furthermore, there is no intention to be bound by any theory presented in the preceding background of the invention or the following detailed description of the invention.

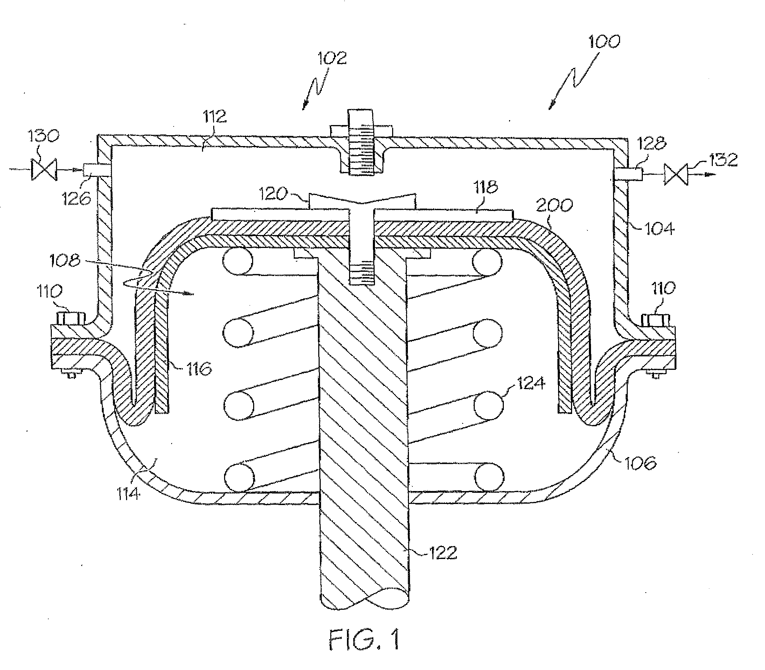

Turning first to FIG. 1, a cross-sectional view of an exemplary actuator 100 that may employ the diaphragm assembly of the present embodiment is shown. As this figure illustrates, the actuator 100 includes a housing assembly 102, that is made up of an upper housing section 104 and a lower housing section 106. The upper housing section 104 is coupled to the lower housing section 106 to form an internal chamber 108 within the housing assembly 102. The upper 104 and lower 106 housing sections are preferably coupled together by, for example, threaded fasteners 110, such as, for example, nuts and bolts, located around the circumference of the upper 104 and lower 106 housing sections. It will be appreciated that any other suitable structure could be used to couple the housing sections together.

An exemplary diaphragm 200 is mounted within the housing assembly 102. In the depicted embodiment, a peripheral portion of the diaphragm 200 is positioned between the upper 104 and lower 106 diaphragm sections, and is thereby clamped in place. It will be appreciated that any one of numerous other suitable structures could be used to clamp the diaphragm 200 in place. With this configuration, the diaphragm 200 divides the internal chamber 108 into at least two portions, a first portion 112 and a second portion 114.

A diaphragm support 116 is mounted below the diaphragm 200 and moves with, and provides support to, the diaphragm 200. In the depicted embodiment, a diaphragm backing plate 118 is positioned over a portion of the diaphragm 200. A threaded stopscrew 120 extends through the backing plate 118, the diaphragm 200, and the support 116, and is threadedly coupled to a push rod 122. The push rod 122 may be coupled to a particular component such as, for example, a valve (not illustrated), the operation of which is be controlled by the actuator 100.

A spring 124 is mounted within the chamber 108 between the diaphragm support 116 and a bottom inside of the housing section 106. The spring 124 is configured to bias the diaphragm support 116 upward (relate to the view in FIG. 1). In the depicted embodiment the upper housing section 104 additionally includes a fluid inlet port 126 and a fluid outlet port 128, each of which extends through the upper housing section 104 and is in fluid communication with the internal chamber first portion 112. The fluid inlet 126 and outlet 128 ports allow entry and exit of fluid from an external supply system (not shows). It will be appreciated that the configuration and number of the fluid inlet 126 and outlet 128 ports depicted in FIG. 1 is merely exemplary, and that other suitable configurations and numbers could be used.

The actuator 100 illustrated in FIG. 1 and described above, is operated by supplying a pressurized fluid, such as air or gas, to the fluid inlet port 126 by, for example, opening an inlet valve 130. Substantially simultaneously, fluid egress from the actuator 100 is prohibited by, for example, closing an outlet valve 132. Thus, the pressurized fluid enters the upper housing section 104 and pressurizes the internal chamber first portion 112. This causes the diaphragm 200 to move the push rod 122 downwardly, against the force of spring 124, to appropriately position the connected component. When the component is no longer needed in this position, the inlet valve 130 is shut, and the outlet valve 132 is opened, depressurizing the internal chamber first portion 112. As a result, the spring 124 moves the push rod 122 upwardly, to thereby return the connected component to its original position.

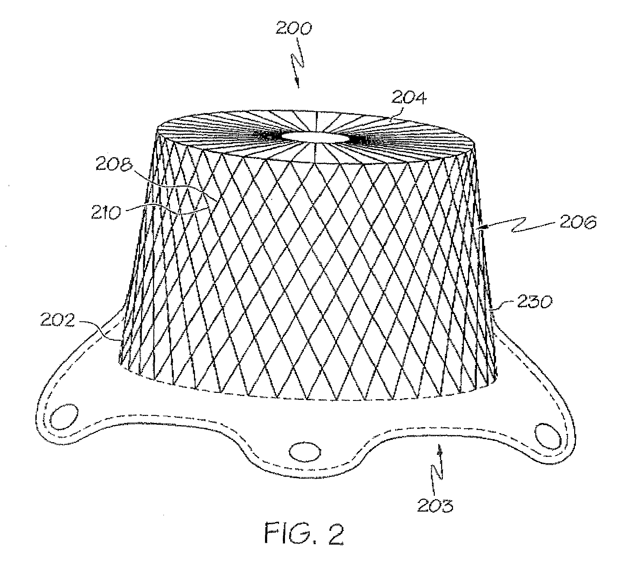

Turning to FIG. 2, a detailed description of an exemplary embodiment of the diaphragm 200 will now be provided. The diaphragm 200 is preferably cup-shaped and has a tubular sidewall 202 with an open end 203 and an enclosed end 204. The enclosed end 204 may be enclosed in any one of numerous manners. For example, the end 204 may be clamped or, alternatively, the end 204 may be bonded to a plate, such as, for example, the diaphgram backing plate 118. The diaphragm 200 is made of fabric that includes a plurality of yarns that are in a bias weave pattern 206 wherein at least one yarn 208 is crossed over a second yarn 210, and each crossing has an angle that is preferably less than about 60°.

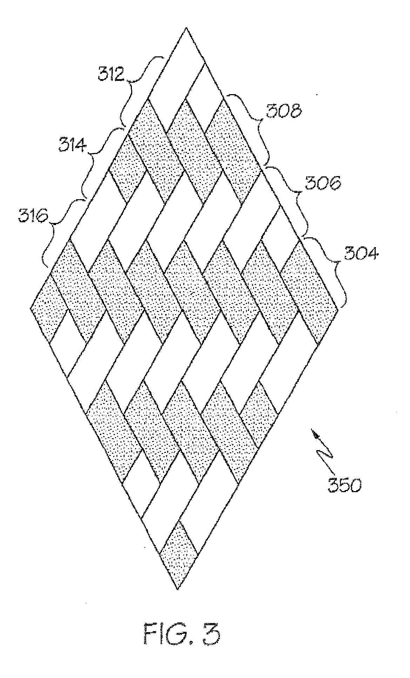

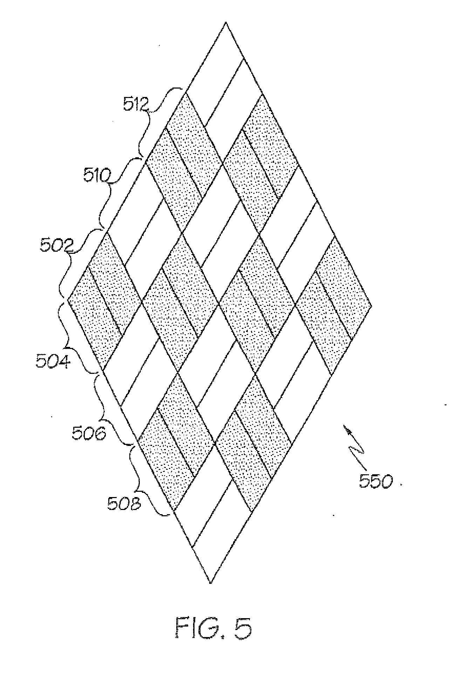

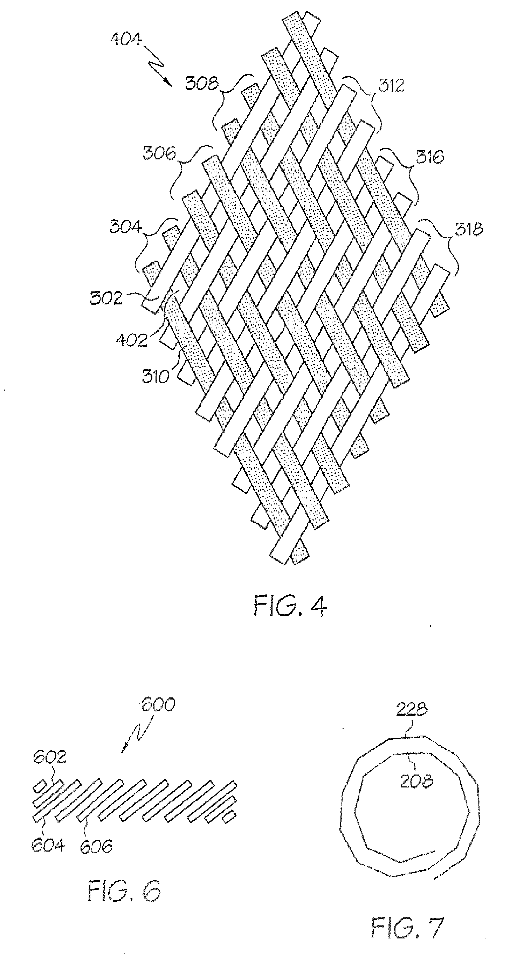

In one exemplary embodiment of the bias weave pattern, shown in FIG. 3, a single yarn 302 is formed over a first pair of yarns 304, then under a second pair of yarns 306, then over a third pair of yarns 308, and so on. Additionally, a yarn 310 of the first pair of yarns 304 is formed over a fourth pair of yarns 312, under a fifth pair of yarns 314, then over a sixth pair of yarns 316, and so on. This pattern is repeated throughout the fabric to form a twill pattern 350. In still another exemplary embodiment, as shown in FIG. 4, the yarns are positioned in the same manner as shown in FIG. 3, however, they are spaced apart from one another providing openings 402 that allow fluid elastomers (discussed in further detail below) to flow therethrough during diaphragm formation. This weave pattern forms a herringbone pattern 404.

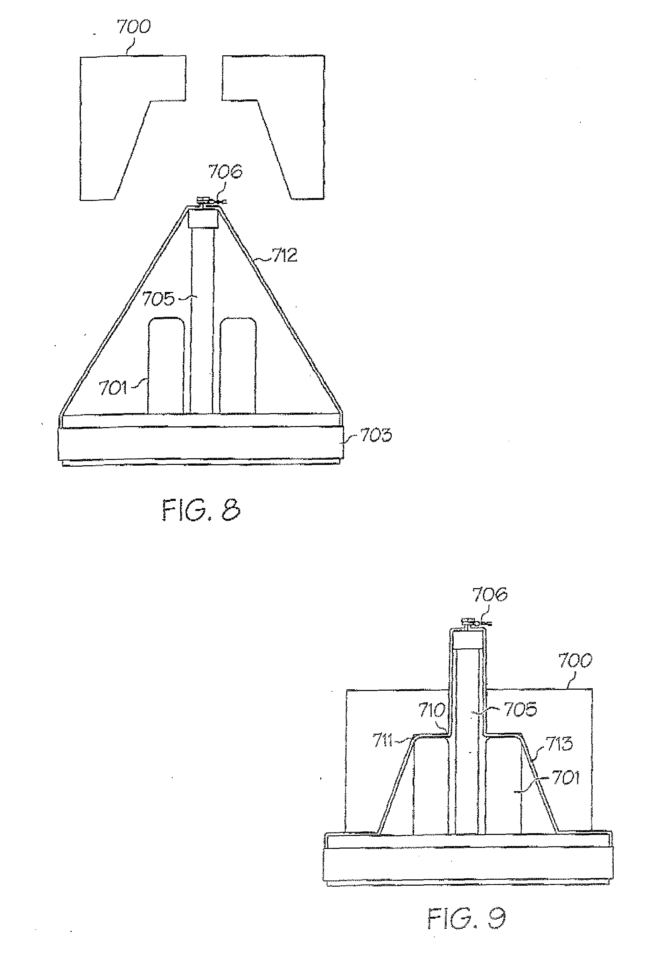

In another exemplary embodiment, two or more yarns are crossed over one another. For example, as shown in FIG. 5, a weave pattern is formed by crossing a first pair of yarns 502 over a second pair of yarns 504, then under a third pair of yarns 506, then over a fourth pair of yarns 508, and so on. The second pair of yarns 504 is crossed under the first pair of yarns 502, over a fifth pair of yarns 510, then under a sixth pair of yarns 512, and so on. This weave pattern is repeated in the fabric to form a basket-weave pattern 550.

The fabric may alternatively include additional properties that increase its structural integrity. In one exemplary embodiment, the fabric has a yarn count of 50 yarns per square inch or greater. In another exemplary embodiment, shown in FIG. 6, each yarn 600 may be formed of a bundle of fibers, for example, three fibers 602, 604, 606 that are twisted at an angle of greater than about 60°. It will be appreciated that each yarn 600 may include fewer or many more fibers than that depicted in FIG. 6. In yet another exemplary embodiment of the diaphragm assembly 200, a cross section of which is shown in FIG. 7, the fabric is rolled and doubled-up to form an inner sidewall 202 and an outer sidewall 228.

The yarns of the fabric may be made of any suitable material such as, for example, polyamide (nylon), fiberglass, or polyester. However, the fabric is preferably constructed of an aromatic polyamide (e.g. Nomex®). It will be appreciated, however, that various other different materials, and combinations of different materials, may also be used.

Returning to FIG. 2, the fabric is impregnated with an elastomer by positioning an uncured elastomer sheet on one side of the fabric and pressing the sheet therein. In a particular preferred embodiment, the elastomer is placed against the surface of the fabric that is exposed to pressurized gas. Thus, it may be either on the inner surface, the outer surface, or both. In the depicted embodiment, the elastomer is on an outer surface of the sidewall 202. The customer may be silicone, fluorosilicone, or fluorocarbon, although other suitable materials may be used. However, in the preferred embodiment, the elastomer is vinyl methyl silicone (VMQ) that exhibits enhanced heat resistance. More specifically, the preferred elastomer is a vinyl methyl silicone material that is heat resistance enhanced with a fine iron oxide powder (preferably less than 1%), which acts as an anti-oxidant, and Silastic® HT-1, a heat stability additive available from Dow Corning, in conjunction with a high temperature catalyst 2,5dimethyl-2,5-di-(t-butyl peroxy) which may be purchased under the trademark Varox ® DBPH-50, and which is available from the R. T. Vanderbilt Co. It will be appreciated that a second layer of elastomer may be coated over the first elastomer layer 230 to thereby strengthen the fabric. The first and second elastomer layers may or may not be similar material.

It will be appreciated that although the diaphragm 200 is depicted and described herein as being constructed of a single diaphragm, it could also be constructed of two or more diaphragms, if so desired for a particular application.

In a preferred embodiment, the diaphragm 200 is formed from a fabric tube structure having a uniform bias angle around its circumference. It will be appreciated that the bias angle may vary along the length of the tube. The fabric tube may be fabricated by any conventional process, such as, for example by braiding or by stitching together the ends of a fabric strip cut on a bias to form a tube. In an embodiment in which the tube is braided, a suitable apparatus is set up with an appropriate number of yarns to from a braided tube and may be instructed to construct a tube-like structure having a diameter and bias angle that vary periodically along its length, This process is suitable for providing a diaphragm having a larger and a smaller diameter region, where the larger region forms the brim of the top hat shape and the smaller region forms the closed top section of the top hat shape.

FiGs. 8 and 9 illustrate two steps in a process of forming an unshaped tube 712 into a fabric preform 713. As shown is the figures, a preform-shaping tool having a top component 700 and a bottom component 701 is employed. First, the unshaped tube 712 is placed over the bottom component 701 and anchored at one end with a circumferential clamp 703. The opposite end of the tube 712 is tied off over a post 705 on the bottom component 701 using a fastener, such as a wire 706. The tube 712 is soaked is a solution, such as, for example, Chemlok® 607 (available through Lord Corporation of Cary, North Carolina), to enhance adhesion and to allow the tube 712 to retain the shape of the preform 713 after exposure to high temperature in the shaping tool, The top component 700 is then hydraulically pressed against the bottom component 701 so that the preform-shaping tool is in a closed configuration, as shown in FIG. 9. The force from the hydraulic press causes the tube 712 to conform to the shape of the inner surface of the shaping tool second component 701, the stretching of the tube 712 fabric reduces the diameter of the tube 712 and decreases the bias angle of the tube 712 to form a top hat region 710. As a result, wrinkles and folds are eliminated at the outer edge 711 of the top hat region 710 and are decreased toward the interior of the top hat region 710.

In the next step of the exemplary method of forming the diaphragm, the preform is impregnated with elastomer. For example, first, a charge of elastomer is disposed within a two part mold that molds the elastomer into a hat shape. After the elastomer is appropriately shaped, the two-part mold is opened and the fabric perform 713 is placed conformably over the shaped elastomer. The mold is closed for a sufficient amount of time, to thereby impregnate the fabric preform 713 with the elastomer and to cure the elastomer. The elastomer-impregnated fabric preform is then removed from the mold and die cut to desired required dimensions.

The diaphragm 200 may be installed into a new actuator 100, as part of its initial manufacturing process, or the diaphragm assembly could be retrofitted into an existing actuator. For example, to retrofit an existing actuator 100, an operator would decouple the upper housing section 104 from the lower housing section 106 by removing the fasteners 10. The stops screw 120 may then be removed, to allow the backing plate 118 and existing diaphragm to be removed from the housing assembly 102. The diaphragm 200 (which may include one or more individual diaphragms) may then be installed, with the fabric patterns properly aligned, and the backing plate 118, stop screw 120 replaced. The upper housing section 104 may then be coupled to the lower housing section 106.

The diaphragm 200 increases the average time between repairs of pneumatic actuators and significantly reduces the likelihood of curtain failures where the actuator is in service.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A diaphragm (200) comprising;
a tubular sidewall (202) having an open end (203) and an enclosed end (204), the sidewall (202) comprising fabric having a plurality of yarns in a bias weave pattern (206); and
a first elastomeric material disposed over the fabric at a predetermined thickness,

2. The diaphragm (200) of claim 1, wherein the bias weave pattern (206) is a herringbone pattern (404).

3. The diaphragm (200) of claim 1, wherein the bias weave pattern (206) comprises at least a first yarn (208) crossed over a second yarn (210) at an angle.

4. The diaphragm (200) of claim 3, wherein the angle is less than about 60°.

5. The diaphragm (200) of claim 1, wherein the fabric comprises at least a first pair of yarns (502) crossed over a second pair of yarns (504) at an angle.

6. The diaphragm (200) of claim 1, wherein the fabric has a yarn count of at least 50 yarns per square inch.

7. The diaphragm (200) of claim 1, wherein the fabric is rolled, and the tubular sidewall (202) includes an inner sidewall (202) and an outer sidewall (228).

8. The diaphragm (200) of claim 1, wherein the bias weave pattern comprises a first yarn (302) crossed over a first pair of yarns (304) and crossed under a second pair of yarns (306) adjacent the first pair of yarns (304),

9. The diaphragm (200) of claim 1, wherein each yarn (600) of the plurality of yarns comprises a plurality of fibers (602, 604, 606) and the plurality of fibers has a twist angle that is greater than about 45 degrees.

10. The diaphragm (200) of claim 1, wherein the enclosed end (204) is clamped.
